(19) Europäisches Patentamt
European Patent Office
Office européen des brevets

(11) **EP 2 051 368 A1**

(12) **EUROPÄISCHE PATENTANMELDUNG**

(43) Veröffentlichungstag:
**22.04.2009  Patentblatt 2009/17**

(51) Int Cl.:
*H02P 6/18* [(2006.01)]     *H02P 6/20* [(2006.01)]

(21) Anmeldenummer: **07118569.8**

(22) Anmeldetag: **16.10.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **ABB Schweiz AG**
**5400 Baden (CH)**

(72) Erfinder:
• **Sieber, Marco**
 **5210 Windisch (CH)**

• **Harder, Thorsten**
 **5322 Koblenz (CH)**
• **Bohren, Patrick**
 **5600 Lenzburg (CH)**

(74) Vertreter: **ABB Patent Attorneys**
 **c/o ABB Schweiz AG**
 **Brown Boveri Strasse 6**
 **5400 Baden (CH)**

(54) **Verfahren zum Bestimmen der Rotorposition einer fremderregten elektrischen Maschine**

(57)  Es wird ein Verfahren zum Bestimmen der Rotorposition einer fremderregten rotierenden elektrischen Maschine angegeben, welche Maschine einen Statorwicklungssatz und einen Rotorwicklungssatz aufweist und bei welchem Verfahren der Statorwicklungssatz von einer zugehörigen Umrichtereinheit und der Rotorwicklungssatz von einer zugehörigen Erregereinheit gespeist wird. Zunächst wird der Statorwicklungssatz mittels der Umrichtereinheit kurzgeschlossen. Danach wird an den Rotorwicklungssatz mittels der Erregereinheit ein Erregerspannungssignal (Uerr) angelegt, welches Erregerspannungssignal (Uerr) eine Änderung von einem einstellbaren ersten Spannungswert (U1) auf einen einstellbaren zweiten Spannungswert (U2) aufweist. Weiterhin wird der Statorstrom (Isa, Isb, Isc) in jeder Wicklung des Statorwicklungssatzes ermittelt und aus der x-Komponente (Isx) der Raumzeigertransformation der Statorströme (Isa, Isb, Isc) und aus der y-Komponente (Isy) der Raumzeigertransformation der Statorströme (Isa, Isb, Isc) ein Rotorpositionswinkel ($\theta$) berechnet.

Fig. 1

EP 2 051 368 A1

## Beschreibung

### Technisches Gebiet

Die Erfindung bezieht sich auf das Gebiet der Betriebsverfahren rotierender elektrischer Maschinen. Sie geht aus von einem Verfahren zum Bestimmen der Rotorposition bzw. der Bestimmung des magnetischen Flusswinkels einer fremderregten rotierenden elektrischen Maschine gemäss dem Oberbegriff des unabhängigen Anspruchs.

### Stand der Technik

Eine heute gängige fremderregte rotierende elektrische Maschine, wie beispielsweise eine Synchronmaschine, weist einen Statorwicklungssatz und einen Rotorwicklungssatz auf, wobei der Statorwicklungssatz typischerweise von einer zugehörigen Umrichtereinheit gespeist wird und der Rotorwicklungssatz zum Aufbau einer magnetischen Erregung von einer Erregereinheit gespeist wird. Die Rotorposition einer solchen rotierenden elektrischen Maschine wird heute hauptsächlich durch Drehgeber bestimmt, der die gewünschte Rotorposition, d.h. den Rotorpositionswinkel bei Stillstand des Rotors bzw. den magnetischen Flusswinkel, liefert. Die Kenntnis über die Position des Rotors bzw. der Position des magnetischen Flussvektors wird typischerweise zur Regelung der Maschine als eine von gängigerweise mehreren Eingangsgrössen benötigt. Drehgeber sind aber sehr anfällig gegen mechanische Beanspruchung und fallen demnach oft aus oder liefern fehlerhafte Rotorpositionswinkelwerte. Zudem ist die Montage aufwendig, da der Drehgeber selbst und zudem die Verkabelung an der Maschine angebracht werden muss, was arbeits- und kostenintensiv ist. Ferner muss ein solcher Drehgeber stets gewartet werden, was zusätzlichen Aufwand bedeutet.

### Darstellung der Erfindung

Aufgabe der Erfindung ist es deshalb, ein Verfahren zum Bestimmen der Rotorposition einer fremderregten rotierenden elektrischen Maschine anzugeben, welches sehr einfach realisierbar und robust ist und ohne Drehgeber auskommt. Diese Aufgabe wird durch die Merkmale des Anspruchs 1 gelöst. In den abhängigen Ansprüchen sind vorteilhafte Weiterbildungen der Erfindung angegeben.

Beim erfindungsgemässen Verfahren zum Bestimmen der Rotorposition einer fremderregten rotierenden elektrischen Maschine weist die Maschine einen Statorwicklungssatz und einen Rotorwicklungssatz auf, wobei der Statorwicklungssatz von einer zugehörigen Umrichtereinheit und der Rotorwicklungssatz von einer zugehörigen Erregereinheit gespeist wird. Nach der Erfindung wird zunächst der Statorwicklungssatz mittels der Umrichtereinheit kurzgeschlossen. Danach wird an den Rotorwicklungssatz mittels der Erregereinheit ein Erregerspannungssignal angelegt, welches Erregerspannungssignal eine Änderung von einem einstellbaren ersten Spannungswert auf einen einstellbaren zweiten Spannungswert aufweist. Weiterhin wird der Statorstrom in jeder Wicklung des Statorwicklungssatzes ermittelt und aus der x-Komponente der Raumzeigertransformation der Statorströme und aus der y-Komponente der Raumzeigertransformation der Statorströme ein Rotorpositionswinkel berechnet, der dann die gesuchte Rotorposition darstellt.

Die Bestimmung der Rotorposition einer fremderregten rotierenden elektrischen Maschine gemäss dem erfindungsgemässen Verfahren ist somit vorteilhaft ohne Drehgeber mit all seinen Nachteilen möglich, so dass insgesamt ein sehr einfach zu realisierendes und robustes Verfahren zur Bestimmung der Rotorposition einer rotierenden elektrischen Maschine erreicht ist. Das erfindungsgemässe Verfahren ist besonders geeignet bei Stillstand des Rotors oder bei sehr langsam drehendem Rotor.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigt:

Fig. 1 Einen ersten zeitlichen Verlauf des Erregerspannungssignals am Rotorwicklungssatz der fremderregten rotierenden elektrischen Maschine beim erfindungsgemässen Verfahren,

Fig. 2 einen zweiten zeitlichen Verlauf des Erregerspannungssignals am Rotorwicklungssatz der fremderregten rotierenden elektrischen Maschine beim erfindungsgemässen Verfahren,

Fig. 3 einen dritten zeitlichen Verlauf des Erregerspannungssignals am Rotorwicklungssatz der fremderregten rotierenden elektrischen Maschine beim erfindungsgemässen Verfahren und

Fig. 4 einen vierten zeitlichen Verlauf des Erregerspannungssignals am Rotorwicklungssatz der fremderregten rotierenden elektrischen Maschine beim erfindungsgemässen Verfahren.

Grundsätzlich sind in den Figuren gleiche Teile mit gleichen Bezugszeichen versehen.

### Wege zur Ausführung der Erfindung

Beim erfindungsgemässen Verfahren zum Bestimmen der Rotorposition einer fremderregten rotierenden elektrischen Maschine weist die Maschine einen Statorwicklungssatz und einen Rotorwicklungssatz auf, wobei der Statorwicklungssatz von einer zugehörigen Umrichtereinheit und der Rotorwicklungssatz von einer zugehörigen Erregereinheit gespeist wird. Synchronmaschine ist beispielsweise eine solche fremderregte rotierende elektrische Maschine, wobei auch jedwede Art von fremderregten rotierenden elektrischen Maschinen denkbar sind. Sowohl der Statorwicklungssatz als auch der Rotorwicklungssatz weisen beispielsweise jeweils drei Wicklungen auf, wobei auch mehr oder weniger Wicklungen denkbar sind. Erfindungsgemäss wird zunächst der Statorwicklungssatz mittels der Umrichtereinheit kurzgeschlossen. Dies erfolgt durch entsprechende Ansteuerung der ansteuerbaren Leistungshalbleiterschalter der Umrichtereinheit. Danach wird an den Rotorwicklungssatz mittels der Erregereinheit ein Erregerspannungssignal Uerr angelegt, welches Erregerspannungssignal Uerr eine Änderung von einem einstellbaren ersten Spannungswert U1 auf einen einstellbaren zweiten Spannungswert U2 aufweist. Dieser Änderung, d.h. dieser transiente Vorgang im Verlauf des Erregerspannungssignal Uerr bewirkt einen Statorstrom Isa, Isb, Isc in jeder Wicklung des Statorwicklungssatzes. Ferner wird der Statorstrom Isa, Isb, Isc einer jeden Wicklung des Statorwicklungssatzes ermittelt. Die Ermittlung erfolgt beispielsweise bei drei Statorwicklungen vorzugsweise durch Messung zweier Statorströme Isa, Isb und Berechnung des dritten Statorstromes Isc aus den beiden gemessenen Statorströmen Isa, Isb. Natürlich können auch sämtliche Statorströme Isa, Isb, Isc durch Messung ermittelt werden. Anschliessend wird aus der x-Komponente Isx der Raumzeigertransformation der Statorströme Isa, Isb, Isc und aus der y-Komponente Isy der Raumzeigertransformation der Statorströme Isa, Isb, Isc ein Rotorpositionswinkel θ berechnet, der dann die gesuchte Rotorposition bzw. die Position des magnetischen Flussvektors darstellt.

Die Bestimmung der Rotorposition der fremderregten rotierenden elektrischen Maschine gemäss dem erfindungsgemässen Verfahren ist somit vorteilhaft ohne Drehgeber mit all seinen Nachteilen möglich, so dass insgesamt ein sehr einfach zu realisierendes und robustes Verfahren zur Bestimmung der Rotorposition erzielt werden kann. Das erfindungsgemässe Verfahren ist besonders geeignet bei Stillstand des Rotors oder bei sehr langsam drehendem Rotor.

Allgemein ist die Raumzeigertransformation dreier Grössen a, b, c gängigerweise folgendermassen definiert:

$$x = \frac{2}{3}\left(a - \frac{b+c}{2}\right)$$

$$y = \frac{b-c}{\sqrt{3}},$$

wobei x die x-Komponente der Raumzeigertransformation der Grössen a, b, c und y die y-Komponente der Raumzeigertransformation der Grössen a, b, c ist.

Falls nun der erste Spannungswert U1 kleiner als der zweite Spannungswert U2 ist, wird der Rotorpositionswinkel θ aus der x-Komponente Isx der Raumzeigertransformation der Statorströme Isa, Isb, Isc und aus der y-Komponente Isy der Raumzeigertransformation der Statorströme Isa, Isb, Isc mit Vorteil nach Massgabe nachfolgender Formel

$$\theta = \arctan\left(\frac{Isy}{Isx}\right) + \pi$$

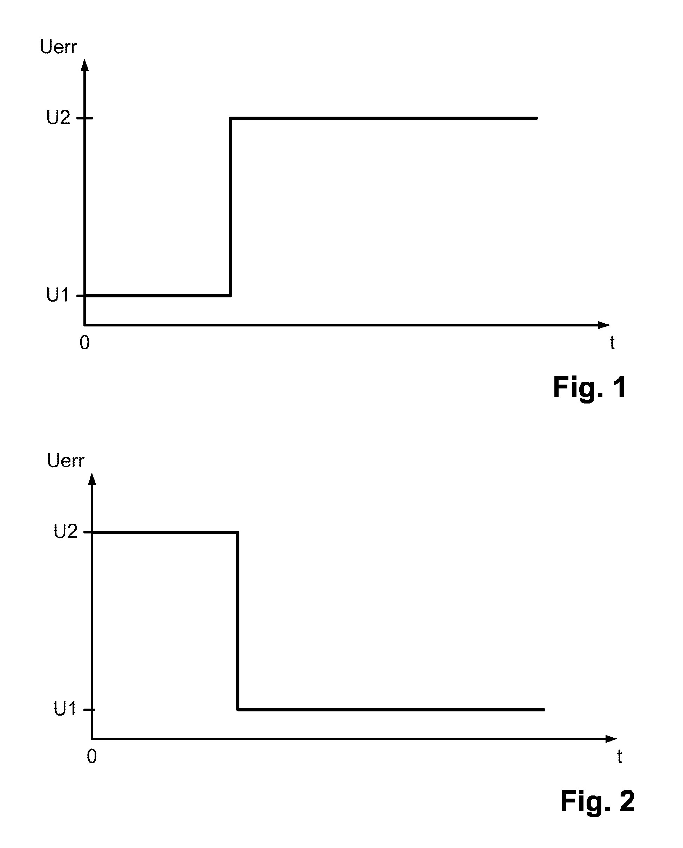

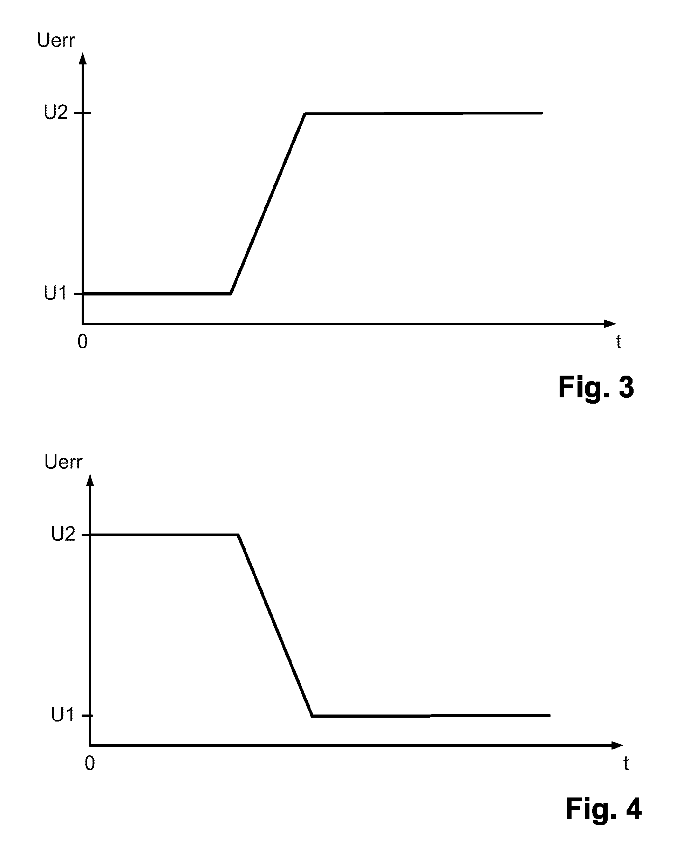

berechnet. In Fig. 1 ist dazu ein erster und in Fig. 3 ein dritter zeitlicher Verlauf des Erregerspannungssignals Uerr am Rotorwicklungssatz der fremderregten rotierenden elektrischen Maschine beim erfindungsgemässen Verfahren gezeigt, wobei der erste Spannungswert U1 kleiner als der zweite Spannungswert U2 ist.

Falls hingegen der erste Spannungswert U1 grösser als der zweite Spannungswert U2 ist, wird der Rotorpositionswinkel θ aus der x-Komponente Isx der Raumzeigertransformation der Statorströme Isa, Isb, Isc und aus der y-Komponente Isy der Raumzeigertransformation der Statorströme Isa, Isb, Isc vorteilhaft nach Massgabe der Formel

$$\theta = \arctan\left(\frac{Isy}{Isx}\right)$$

berechnet. In Fig. 2 ist dazu ein zweiter und in Fig. 4 ein vierter zeitlicher Verlauf des Erregerspannungssignals Uerr am Rotorwicklungssatz der fremderregten rotierenden elektrischen Maschine beim erfindungsgemässen Verfahren gezeigt, wobei der erste Spannungswert U1 grösser als der zweite Spannungswert U2 ist. Die vorstehend genannten Berechnungen des Rotorpositionswinkel θ sind demnach denkbar einfach und können problemlos beispielsweise als Berechnungsroutine in einem Softwareprogramm für einen digitalen Signalprozessor realisiert werden.

Es hat sich als besonders vorteilhaft erwiesen, dass der erste Spannungswert U1 auf 0V und der zweite Spannungswert U2 auf den Nennerregerspannungswert eingestellt wird. Es ist aber genauso denkbar, dass der erste Spannungswert U1 auf den Nennerregerspannungswert und der zweite Spannungswert U2 auf 0V eingestellt wird.

Gemäss dem zeitlichen Verlauf des Erregerspannungssignals Uerr nach Fig. 1 und Fig. 2 erfolgt die Änderung von dem ersten Spannungswert U1 auf den zweiten Spannungswert U2 in bevorzugter Weise im wesentlichen sprungartig. Gemäss dem zeitlichen Verlauf des Erregerspannungssignals Uerr nach Fig. 3 und Fig. 4 erfolgt die Änderung von dem ersten Spannungswert U1 auf den zweiten Spannungswert U2 bevorzugt im wesentlichen rampenartig. Die vorstehend genannte sprungartige und rampenartige Änderung im zeitlichen Verlauf des Erregerspannungssignals Uerr lässt sich vorteilhaft ohne grossen Aufwand und damit sehr einfach realisieren. Neben dieser sprungartigen bzw. rampenartigen Änderung sind selbstverständlich auch alternative transiente Vorgänge oder stationäre Verläufe denkbar, welche eine Änderung von einem ersten Spannungswert U1 auf einen zweiten Spannungswert U2 aufweisen.

**Patentansprüche**

1. Verfahren zum Bestimmen der Rotorposition einer fremderregten rotierenden elektrischen Maschine, welche Maschine einen Statorwicklungssatz und einen Rotorwicklungssatz aufweist,
bei dem der Statorwicklungssatz von einer zugehörigen Umrichtereinheit und der Rotorwicklungssatz von einer zugehörigen Erregereinheit gespeist wird, **dadurch gekennzeichnet,**
**dass** der Statorwicklungssatz mittels der Umrichtereinheit kurzgeschlossen wird,
**dass** an den Rotorwicklungssatz mittels der Erregereinheit ein Erregerspannungssignal (Uerr) angelegt wird, welches Erregerspannungssignal (Uerr) eine Änderung von einem einstellbaren ersten Spannungswert (U1) auf einen einstellbaren zweiten Spannungswert (U2) aufweist,
**dass** der Statorstrom (Isa, Isb, Isc) in jeder Wicklung des Statorwicklungssatzes ermittelt wird, und
**dass** aus der x-Komponente (Isx) der Raumzeigertransformation der Statorströme (Isa, Isb, Isc) und aus der y-Komponente (Isy) der Raumzeigertransformation der Statorströme (Isa, Isb, Isc) ein Rotorpositionswinkel (θ) berechnet wird.

2. Verfahren nach Anspruch 1, **dadurch gekennzeichnet, dass**, falls der erste Spannungswert (U1) kleiner als der zweite Spannungswert (U2) ist, der Rotorpositionswinkel (θ) aus der x-Komponente (Isx) der Raumzeigertransformation der Statorströme (Isa, Isb, Isc) und aus der y-Komponente (Isy) der Raumzeigertransformation der Statorströme (Isa, Isb, Isc) nach Massgabe der Formel

$$\theta = \arctan\left(\frac{Isy}{Isx}\right) + \pi$$

berechnet wird.

3. Verfahren nach Anspruch 1, **dadurch gekennzeichnet, dass**, falls der erste Spannungswert (U1) grösser als der zweite Spannungswert (U2) ist, der Rotorpositionswinkel (θ) aus der x-Komponente (Isx) der Raumzeigertransformation der Statorströme (Isa, Isb, Isc) und aus der y-Komponente (Isy) der Raumzeigertransformation der Statorströme (Isa, Isb, Isc) nach Massgabe der Formel

$$\theta = \arctan\left(\frac{Isy}{Isx}\right)$$

berechnet wird.

4. Verfahren nach Anspruch 2, **dadurch gekennzeichnet, dass** der erste Spannungswert (U1) auf 0V und der zweite Spannungswert (U2) auf den Nennerregerspannungswert eingestellt wird.

5. Verfahren nach Anspruch 3, **dadurch gekennzeichnet, dass** der erste Spannungswert (U1) auf den Nennerregerspannungswert und der zweite Spannungswert (U2) auf 0V eingestellt wird.

6. Verfahren nach einem der Ansprüche 1 bis 5, **dadurch gekennzeichnet, dass** die Änderung von dem ersten Spannungswert (U1) auf den zweiten Spannungswert (U2) im wesentlichen sprungartig erfolgt.

7. Verfahren nach einem der Ansprüche 1 bis 5, **dadurch gekennzeichnet, dass** die Änderung von dem ersten Spannungswert (U1) auf den zweiten Spannungswert (U2) im wesentlichen rampenartig erfolgt.

Fig. 1

Fig. 2

**Fig. 3**

**Fig. 4**

**Europäisches Patentamt**

**EUROPÄISCHER RECHERCHENBERICHT**

Nummer der Anmeldung

EP 07 11 8569

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | FR 2 896 104 A (VALEO EQUIP ELECTR MOTEUR [FR]) 13. Juli 2007 (2007-07-13) * Seite 29, Zeile 30 - Seite 31, Zeile 26 * ----- | 1-7 | INV. H02P6/18 H02P6/20 |
| Y | GB 2 428 916 A (STORED ENERGY TECHNOLOGY LTD [GB]) 7. Februar 2007 (2007-02-07) * Seite 9, Zeile 20 - Seite 10, Zeile 22 * ----- | 1-6 | |
| Y | US 4 746 850 A (ABBONDANTI ALBERTO [US]) 24. Mai 1988 (1988-05-24) * Spalte 3, Zeile 29 - Spalte 4, Zeile 27 * ----- | 7 | |
| A | DE 23 53 594 B1 (SIEMENS AG) 6. März 1975 (1975-03-06) * Spalte 6, Zeile 31 - Spalte 7, Zeile 47 * ----- | 1-7 | |
| A | US 2006/052976 A1 (CHEN HANYANG B [US] ET AL) 9. März 2006 (2006-03-09) * Absätze [0025] - [0043] * ----- | 1-7 | RECHERCHIERTE SACHGEBIETE (IPC) H02P |
| A | US 2005/283324 A1 (SWANSON DAVID F [US]) 22. Dezember 2005 (2005-12-22) * Absätze [0043] - [0052] * ----- | 1-7 | |
| A | US 2006/022623 A1 (INABA YUTAKA [JP] ET AL) 2. Februar 2006 (2006-02-02) * Absätze [0019], [0024], [0124] * ----- | 1-7 | |
| A | WO 90/12278 A (ELIN ENERGIEANWENDUNG [AT]) 18. Oktober 1990 (1990-10-18) * Seite 7, Zeile 5 - Zeile 16 * ----- | 1-7 | |

Der vorliegende Recherchenbericht wurde für alle Patentansprüche erstellt

| Recherchenort | Abschlußdatum der Recherche | Prüfer |
|---|---|---|
| München | 13. März 2008 | Frapporti, Marc |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 11 8569

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-03-2008

| Im Recherchenbericht angeführtes Patentdokument | | Datum der Veröffentlichung | Mitglied(er) der Patentfamilie | | Datum der Veröffentlichung |
|---|---|---|---|---|---|
| FR 2896104 | A | 13-07-2007 | WO | 2007080294 A1 | 19-07-2007 |
| GB 2428916 | A | 07-02-2007 | WO | 2007015065 A1 | 08-02-2007 |
| US 4746850 | A | 24-05-1988 | CA | 1286714 C | 23-07-1991 |
| DE 2353594 | B1 | 06-03-1975 | AT | 333899 B | 10-12-1976 |
| | | | AT | 749174 A | 15-04-1976 |
| | | | CH | 578801 A5 | 13-08-1976 |
| | | | FR | 2249479 A1 | 23-05-1975 |
| | | | GB | 1464740 A | 16-02-1977 |
| | | | JP | 1104913 C | 16-07-1982 |
| | | | JP | 50075067 A | 20-06-1975 |
| | | | JP | 56047486 B | 10-11-1981 |
| | | | SE | 399155 B | 30-01-1978 |
| | | | SE | 7412340 A | 28-04-1975 |
| | | | US | 3909688 A | 30-09-1975 |
| US 2006052976 | A1 | 09-03-2006 | KEINE | | |
| US 2005283324 | A1 | 22-12-2005 | KEINE | | |
| US 2006022623 | A1 | 02-02-2006 | JP | 2006050714 A | 16-02-2006 |
| WO 9012278 | A | 18-10-1990 | AT | 408591 B | 25-01-2002 |
| | | | AT | 81089 A | 15-05-2001 |

EPO FORM P0461

Für nähere Einzelheiten zu diesem Anhang : siehe Amtsblatt des Europäischen Patentamts, Nr.12/82